(19) Europäisches Patentamt
European Patent Office
Office européen des brevets

(11) **EP 1 878 941 A1**

(12) **DEMANDE DE BREVET EUROPEEN**

(43) Date de publication:
**16.01.2008 Bulletin 2008/03**

(51) Int Cl.:
**F16F 13/08** *(2006.01)*     **F16F 5/00** *(2006.01)*

(21) Numéro de dépôt: **06014229.6**

(22) Date de dépôt: **10.07.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **Bureau Mertens**
**1341 Céroux-Mousty (BE)**

(72) Inventeur: **Mertens, Rudy**
**1341 Céroux-Mousty (BE)**

(54) **Ressort de compression**

(57)     Ressort de compression comprenant, d'une part, un bloc creux (1) en élastomère thermoplastique ayant subi successivement une déformation par compression au-delà de la limite élastique de l'élastomère et une détente et, d'autre part, un amortisseur hydraulique, logé dans une chambre interne contractile (3) du bloc (1).

Fig. 7

EP 1 878 941 A1

## Description

**Domaine de l'invention**

L'invention se rapporte aux ressorts, spécialement aux ressorts de compression en élastomère thermoplastique.

**Etat de la technique**

Dans les documents US-A 4 198 037 et GB-A-2 180 618, on décrit des ressorts en élastomère thermoplastique, spécialement conçus pour fonctionner en compression. Ces ressorts comprennent un corps formé d'un bloc en élastomère thermoplastique auquel on a fait subir un traitement mécanique approprié, comprenant une déformation par compression au delà de la limite élastique de l'élastomère thermoplastique, la compression étant suivie d'une détente du bloc. A l'issue de la détente, le bloc en élastomère thermoplastique conserve une déformation rémanente, qui dépend de la grandeur de l'effort de compression et de l'élastomère thermoplastique sélectionné.

Au cours d'une utilisation normale, ces ressorts connus sont normalement soumis à une succession de cycles comprenant une compression suivie d'une détente et ils se révèlent généralement posséder un coefficient d'amortissement substantiel. Ce coefficient d'amortissement résulte du fait qu'une partie seulement de l'énergie mécanique emmagasinée au cours de la compression est restituée au cours de la détente, la différence étant dissipée sous forme de chaleur. Ce coefficient d'amortissement est défini par la relation

$$\frac{W_e - W_r}{W_e},\ \text{où}$$

$W_e$ désigne l'énergie mécanique emmagasinée au cours de la compression, et
$W_r$ désigne l'énergie restituée au cours de la détente.

En pratique, le coefficient d'amortissement de ces ressorts de compression connus est toutefois insuffisant pour certaines applications, notamment lorsqu'ils sont utilisés dans des tampons ou butoirs équipant les wagons utilisés pour le transport ferroviaire de marchandises.

**Résumé de l'invention**

L'invention vise à remédier à la déficience des ressorts connus décrits ci-dessus.

L'invention a dès lors pour objectif d'augmenter le coefficient d'amortissement des ressorts de compression connus en élastomère thermoplastique.

L'invention a plus particulièrement pour objectif de fournir un ressort de compression comprenant un bloc en élastomère thermoplastique, ledit ressort possédant un coefficient d'amortissement élevé, permettant notamment son utilisation dans des tampons ou butoirs de voitures de chemin de fer ou de wagons pour le transport ferroviaire de marchandises.

Un autre objectif de l'invention est de fournir un système de suspension comprenant un ressort de compression en élastomère thermoplastique, ce système de suspension possédant un coefficient d'amortissement élevé et étant compact en volume.

En conséquence, l'invention concerne un ressort de compression comprenant un bloc en élastomère thermoplastique ayant subi successivement une déformation par compression au-delà de la limite élastique de l'élastomère et une détente, le ressort se caractérisant en ce qu'un amortisseur hydraulique est logé dans une chambre interne contractile du bloc.

**Description détaillée de l'invention**

Le ressort selon l'invention comprend un bloc en élastomère thermoplastique. Par définition, un élastomère est une matière macromoléculaire présentant des propriétés élastiques. Un élastomère thermoplastique est un élastomère qui conserve des propriétés élastiques après avoir subi une déformation rémanente par fluage plastique sous l'action d'un effort de compression. Les propriétés élastiques à la compression, de l'élastomère thermoplastique qui a subi la déformation rémanente sont normalement différentes de celles de l'élastomère avant la déformation. Les élastomères thermoplastiques sont bien connus en technique et sont généralement des élastomères de synthèse. Moyennant les propriétés énoncées plus haut, l'élastomère thermoplastique sélectionné pour le ressort selon l'invention n'est pas critique pour la définition de l'invention. On utilise avantageusement des polyesters thermoplastiques. Des exemples de polyesters thermoplastiques convenant pour l'invention appartiennent à la famille des copolymères d'esters de polyéthers. Des copolymères obtenus par transestérification d'un ester dérivé d'acide phtalique, d'un glycol à faible poids moléculaire et d'un polyéther glycol conviennent bien, notamment ceux commercialisés sous la marque HYTREL® (Du Pont). Des informations concernant ces copolymères sont notamment accessibles dans le document Polymer Engineering and Science, décembre 1974, Vol. 14, n°12, pages 848 à 852, ainsi que dans le document Encyclopedia of polymer Science and Technology, Supl. Vol. II, Wiley & Son, New York, 1977, pages 484-509. Les élastomères connus sous la marque ARNITEL® (DSM) conviennent spécialement bien.

Le bloc en élastomère thermoplastique du ressort a subi un traitement mécanique approprié, comprenant une déformation par compression au delà de la limite élastique de l'élastomère thermoplastique, la compression étant suivie d'une détente du bloc. Dans la suite du présent mémoire, le traitement mécanique qui vient d'être décrit sera désigné « traitement mécanique de compression/détente » et l'expression « axe de compression » désignera la direction de l'effort de compression mis en oeuvre dans le traitement mécanique de compression/détente.

A l'issue du traitement mécanique de compression/détente, le bloc en élastomère thermoplastique conserve une déformation rémanente, qui dépend de la grandeur de l'effort de compression et de l'élastomère thermoplastique sélectionné.

Dans le traitement mécanique de compression/détente, l'effort de compression doit être supérieur à la limite élastique de l'élastomère thermoplastique, de manière que le bloc du ressort conserve une déformation rémanente. La grandeur optimum de l'effort de compression va dépendre de la forme et des dimensions du bloc, ainsi que de l'élastomère thermoplastique et des propriétés recherchées pour le ressort. Elle doit être déterminée dans chaque cas particulier par l'homme du métier. Des informations concernant le traitement mécanique de compression/détente sont accessibles dans les documents US-A-4 198 037, GB-A-2 180 618 et WO 98/46930. Bien que cela ne soit pas indispensable, le traitement mécanique de compression/détente peut être accompagné d'un traitement thermique approprié avant, pendant ou après avoir exercé l'effort de compression. Des informations concernant ce traitement thermique sont accessibles dans le document US-A-4 198 037.

L'axe de compression est généralement rectiligne.

La forme du bloc en élastomère thermoplastique n'est pas critique pour la définition de l'invention. En pratique, on préfère utiliser un bloc cylindrique. Dans le présent mémoire, l'expression « bloc cylindrique » désigne une surface géométrique définie par le déplacement d'une ligne géométrique (la génératrice) parallèlement à elle-même, le long d'une autre ligne géométrique (la directrice), localisée entièrement dans un plan géométrique.

On préfère les blocs cylindriques droits, dans lesquels la génératrice est une droite. Les blocs cylindriques droits dans lesquels la directrice est une circonférence, une ellipse ou un polygone sont spécialement préférés. Dans le cas d'un polygone, celui-ci est de préférence un polygone régulier.

Les blocs de révolution sont recommandés, spécialement les cylindres droits (dans lesquels, par définition, la directrice est une circonférence et la génératrice est une droite) .

Dans le cas où le bloc du ressort est un cylindre droit, l'axe de compression précité est de préférence parallèle à l'axe de révolution du cylindre. Sous l'action de l'effort de compression (qui doit être au moins suffisant pour provoquer une déformation rémanente du cylindre) le cylindre subit une contraction axiale et une expansion radiale. A l'issue de la détente (qui consiste à relâcher l'effort de compression), le cylindre adopte une forme intermédiaire entre celle qu'il avait avant d'exercer l'effort de compression et celle qu'il avait à l'état comprimé.

Dans cette forme de réalisation particulière de l'invention, le cylindre peut être un cylindre unitaire ou un cylindre composite que l'on obtient en enchâssant un noyau cylindrique en élastomère thermoplastique, dans un fourreau en élastomère thermoplastique. Dans cette variante d'exécution particulière de l'invention, le fourreau et le noyau peuvent être réalisés dans le même élastomère thermoplastique ou en des élastomères thermoplastiques différents. Des blocs-ressorts de ce type sont notamment décrits dans les documents WO 98/46930 et WO 2006/021357.

Dans le ressort selon l'invention, la position du bloc en élastomère thermoplastique est telle que son axe de compression (défini plus haut) est sensiblement parallèle à la direction des efforts de compression qu'il subit pendant une utilisation normale dudit ressort.

Dans le ressort selon l'invention, le bloc en élastomère thermoplastique est creux et comporte une chambre interne contractile. La chambre contractile du bloc creux est conçue de telle sorte que, pendant une utilisation normale du ressort, le volume de ladite chambre diminue lorsque le bloc subit une compression dans la direction de l'axe de compression précité et croît lorsque ledit bloc subit une détente dans ladite direction.

Dans la suite du présent mémoire, l'expression « utilisation normale du ressort » désigne une utilisation dans laquelle le ressort est soumis à des efforts de compression qui sont inférieurs à la limite élastique de l'élastomère thermoplastique ayant subi le traitement mécanique de compression/détente défini plus haut.

Selon l'invention, la chambre contractile contient un amortisseur hydraulique. Les amortisseurs hydrauliques sont bien connus en technique et communément utilisés dans les systèmes de suspension des véhicules terrestres ou d'organes de machines industrielles. Ils comprennent généralement un liquide de viscosité réglée. Dans le ressort selon l'invention, la fonction de l'amortisseur hydraulique consiste à conférer au ressort un coefficient d'amortissement supérieur à celui du bloc en élastomère thermoplastique.

Dans un mode d'exécution préféré du ressort selon l'invention, le liquide visqueux de l'amortisseur hydraulique occupe la totalité de la chambre contractile, celle-ci étant étanche audit liquide. Dans cette forme de réalisation de l'invention, la chambre contractile et le liquide visqueux qu'elle contient constituent une partie au moins de l'amortisseur hydraulique.

Dans le mode d'exécution préféré qui vient d'être décrit, le liquide visqueux peut être un liquide compressible ou un liquide incompressible. Les silicones constituent des exemples de liquides visqueux compressibles, utilisables dans le système de suspension selon l'invention. Les huiles (minérales ou végétales) visqueuses constituent des exemples de liquides visqueux incompressibles utilisables dans le ressort selon l'invention. La viscosité du liquide va conditionner le coefficient d'amortissement de l'amortisseur. La viscosité optimum doit être déterminée dans chaque cas particulier en fonction de divers paramètres parmi lesquels figurent notamment (liste non exhaustive), la forme et les dimensions du bloc en élastomère thermoplastique, la forme et les dimensions de la chambre contractile, l'élastomère thermoplastique mis en oeuvre, les paramètres du traitement mécanique de compression/détente et la destination du ressort.

Dans une forme de réalisation particulière du ressort selon l'invention, la chambre contractile du bloc se trouve en communication avec un réservoir expansible élastiquement, par l'intermédiaire d'un ajutage calibré et le liquide visqueux occupe sensiblement la totalité du volume de la chambre contractile et du réservoir expansible. Dans cette forme de réalisation de l'invention, la fonction du réservoir expansible consiste notamment à compenser, par expansion, une contraction de la chambre contractile. L'amortissement du ressort est alors une conséquence de la perte de charge subie par le liquide visqueux dans l'ajutage, lors des contractions et expansions successives de la chambre contractile. Le facteur d'amortissement du ressort dépend notamment d'un choix approprié de l'ajutage et/ou de la viscosité du liquide.

Cette forme de réalisation particulière du ressort selon l'invention, trouve une application intéressante dans des systèmes de suspension d'engins de locomotion ou de machines-outils.

Dans une variante particulière de la forme de réalisation qui vient d'être décrite, la chambre contractile et le réservoir expansible sont reliés en boucle par deux canalisations comprenant chacune une vanne unidirectionnelle et ces deux vannes sont conçues de telle sorte que l'une des vannes soit ouverte et l'autre fermée pendant une contraction du volume de la chambre et une expansion correspondante du volume du réservoir et vice-versa.

Dans cette variante de l'invention, l'une au moins des canalisations comprend au moins un ajutage calibré destiné à assurer l'amortissement du ressort de la manière exposée plus haut. On préfère que chacune des canalisations comprenne au moins un tel ajutage calibré. Les ajutages calibrés peuvent comprendre les vannes unidirectionnelles précitées.

Dans la forme de réalisation particulière de l'invention, décrite plus haut et sa variante particulière d'exécution, le liquide visqueux peut être indifféremment un liquide compressible ou un liquide incompressible. On préfère les liquides incompressibles.

Le ressort selon l'invention peut comprendre un seul bloc creux en élastomère thermoplastique. En variante, il peut comprendre plusieurs blocs creux en élastomère thermoplastique, lesdits blocs étant superposés ou juxtaposés et ayant subi chacun un traitement mécanique de compression/détente tel qu'explicité précédemment. En plus du ou des bloc(s) creux, le ressort selon l'invention peut éventuellement comprendre d'autres organes élastiques communément utilisés en tant que ressort de compression, par exemple des fils métalliques roulés en spirales ou des corps pleins ou évidés en élastomère thermoplastique, du type de ceux décrits dans les documents US-A-4 198 037, GB-A-2 180 618, WO-98/46930, WO-01/34995 et WO-2006/021357.

Dans une forme de réalisation avantageuse de l'invention, le ressort comprend au moins deux blocs creux en élastomère thermoplastique, superposés et la chambre interne contractile précitée est commune aux deux blocs. Dans cette forme de réalisation de l'invention, les blocs creux sont de préférence des blocs cylindriques tubulaires, de telle sorte que leurs chambres internes respectives soient des chambres axiales, disposées dans le prolongement l'une de l'autre. Des exemples de ressorts de ce type sont notamment décrits dans les documents GB 2180618 et WO 98/46930. Dans cette forme de réalisation du ressort selon l'invention, il convient d'assurer l'étanchéité entre les deux blocs creux superposés, lorsque la chambre interne contractile est remplie d'un liquide visqueux. Cette étanchéité peut être réalisée par tout moyen connu adéquat, par exemple au moyen d'une colle.

Dans une forme de réalisation avantageuse du ressort selon l'invention, le bloc en élastomère thermoplastique comprend un corps cylindrique unitaire en élastomère thermoplastique, formé d'au moins deux boudins superposés séparés par une bague rigide, la chambre interne contractile étant commune aux deux boudins. Dans cette forme de réalisation de l'invention, le corps en élastomère thermoplastique est du type de ceux décrits dans le document WO-01/34995 et il est obtenu au moyen d'un procédé selon lequel on enchâsse un cylindre tubulaire droit en élastomère thermoplastique dans une bague sensiblement indéformable et on soumet ensuite le cylindre au traitement mécanique de compression/détente défini plus haut pour provoquer une déformation rémanente du cylindre de part et d'autre de la bague.

Dans une variante d'exécution préférée de cette forme de réalisation avantageuse de l'invention, la bague précitée est prise en sandwich entre deux manchons en élastomère thermoplastique, cerclant le corps cylindrique unitaire. Dans cette variante de l'invention, le bloc en élastomère thermoplastique est du type de ceux décrits et revendiqués dans le document WO 20006/021357 (Bureau Mertens), obtenus au moyen d'un procédé selon lequel on enchâsse un cylindre en élastomère thermoplastique dans un assemblage tubulaire comprenant n manchons (n étant au moins égal à 2) en élastomère thermoplastique alternant avec (n-1) bague(s) sensiblement indéformable(s), de telle manière que la ou chaque bague soit prise en sandwich entre une paire desdits manchons et on soumet le corps composite ainsi obtenu, au traitement mécanique de compression/détente défini plus haut pour provoquer une déformation rémanente du cylindre.

Dans une autre variante d'exécution de la forme de réalisation avantageuse décrite ci-dessus, un barreau indéformable se trouve inséré axialement dans la chambre interne contractile, de telle sorte que, pendant une utilisation normale du ressort, les boudins coulissent le long du barreau, à hauteur de la ou de chaque bague. Dans cette variante de l'invention, le barreau sert de guide pour éviter un flambage du bloc élastomère pendant une utilisation normale du ressort. Le barreau doit avoir des dimensions et/ou un profil adaptés pour ne pas entraver la circulation du liquide visqueux dans la chambre contractile, à hauteur de la bague. Un premier moyen consiste à conférer au barreau un diamètre légèrement inférieur à celui de la chambre contractile, à hauteur de la bague. Un autre moyen consiste à ménager des rainures longitudinales dans le barreau, à hauteur de la bague.

Dans une forme de réalisation recommandée du ressort selon l'invention, le ou chaque bloc creux en élastomère thermoplastique est un corps géométrique en forme d'anneau, dont la paroi latérale présente une ou plusieurs zones cintrées vers l'extérieur du bloc. Dans cette forme de réalisation de l'invention, le profil cintré de la paroi latérale du corps annulaire est normalement le résultat du traitement mécanique de compression/détente défini plus haut, lorsqu'il est appliqué à un cylindre droit en élastomère thermoplastique. Lorsque le cylindre droit est un tube cylindrique droit, la chambre interne contractile présente une ou plusieurs zones enflées. On trouve des exemples de ressorts de compression de ce type dans les documents WO 98/46930 et WO 20006/021357.

Toutes autres choses égales par ailleurs, le ressort de compression selon l'invention possède un coefficient d'amortissement supérieur à celui des ressorts de compression connus en élastomère thermoplastique.

Le ressort selon l'invention est utilisable dans toutes applications nécessitant des ressorts de compression présentant des coefficients d'amortissement élevés.

Le ressort selon l'invention trouve une application intéressante dans des tampons ou butoirs destinés aux véhicules ferroviaires, tels que les locomotives et les autorails, les voitures de chemin de fer pour voyageurs et les wagons ferroviaires pour le transport de marchandises ou de bestiaux.

Le ressort selon l'invention trouve également une application dans des pare-chocs destinés à des véhicules routiers ou maritimes.

Le ressort selon l'invention trouve une application supplémentaire dans des systèmes de suspension de véhicules terrestres à roues ou à chaînes, tels que des voitures automobiles, des camions, des motocyclettes, des chariots ou des remorques, des engins de génie civil ou militaire et des voitures de chemin de fer. On lui trouve également des applications dans des machines industrielles fixes, par exemple des machines-outils, ainsi que pour la suspension d'organes mécaniques mobiles dans du matériel électroménager (lave-linge, lave-vaisselle, etc.).

L'invention concerne dès lors également des tampons pour véhicules ferroviaires, lesdits tampons comprenant un ressort de compression selon l'invention.

L'invention concerne aussi un système de suspension comprenant au moins un ressort de compression, ledit ressort étant conforme à l'invention.

**Brève description des figures**

Des particularités et détails de l'invention vont apparaître au cours de la description suivante des figures annexées, qui représentent quelques formes de réalisation particulières de l'invention.

La figure 1 montre, en section transversale axiale, une première forme de réalisation du ressort selon l'invention, au repos ;

La figure 2 montre le ressort de la figure 1, à l'état comprimé ;

La figure 3 montre, en section transversale axiale, une deuxième forme de réalisation du ressort selon l'invention ;

La figure 4 montre, en section transversale axiale, une troisième forme de réalisation du ressort selon l'invention ;

Les figures 5 et 6 montrent, en section transversale axiale, deux variantes d'exécution de la forme de réalisation de la figure 4 ; et

La figure 7 montre, en section transversale axiale, une forme de réalisation particulière du système de suspension selon l'invention.

Les figures sont des schémas et ne sont pas dessinées à l'échelle.

Généralement, les mêmes numéros de référence désignent les mêmes éléments.

**Description détaillée de modes de réalisation particuliers**

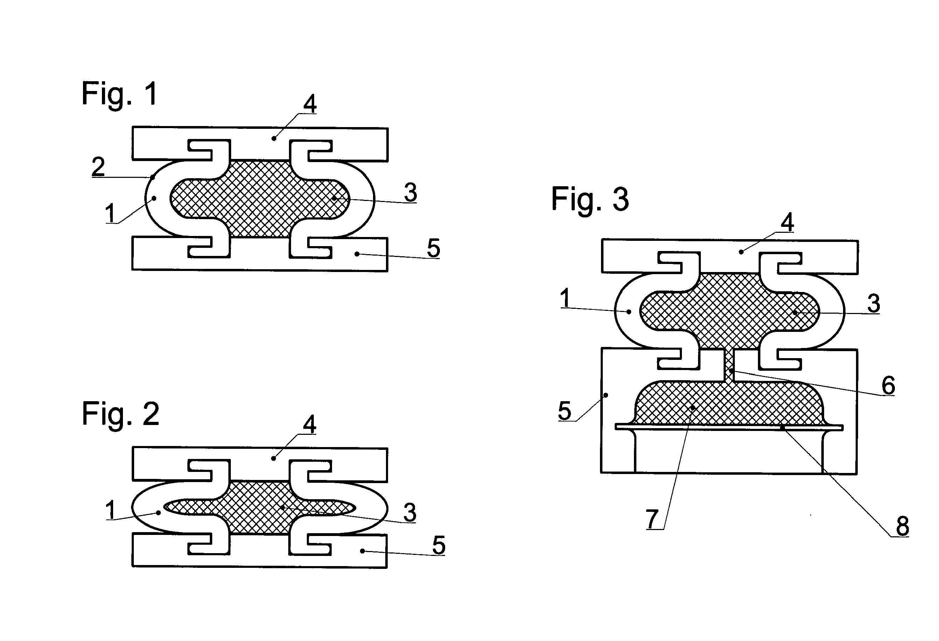

Le ressort schématisé à la figure 1 comprend un bloc annulaire 1 en élastomère thermoplastique. Le bloc 1 a la forme d'un boudin, sa paroi latérale externe 2 étant cintrée vers l'extérieur. Le bloc 1 est percé d'une chambre interne tubulaire 3 qui est évasée dans sa zone centrale. Le bloc 1 a été obtenu en soumettant un tube cylindrique droit à un traitement mécanique de compression/détente comprenant une compression du tube cylindrique au-delà de la limite de déformation élastique de l'élastomère et une détente. A l'issue du traitement mécanique de compression/détente, le tube cylindrique conserve une déformation rémanente, lui donnant l'aspect du bloc 1.

Le bloc 1 est scellé dans deux plaques rigides 4 et 5, généralement en métal, qui obturent hermétiquement la chambre 3.

La chambre 3 est entièrement remplie d'un liquide visqueux compressible, par exemple une silicone.

Dans le ressort de la figure 1, le bloc 1 possède des propriétés élastiques et un coefficient d'amortissement défini. L'ensemble formé de la chambre interne 3 et du liquide visqueux qui s'y trouve constitue un amortisseur hydraulique, qui accroît le coefficient d'amortissement du ressort.

A la figure 2, les plaques 4 et 5 ont été rapprochées pour comprimer le bloc 1 sous un effort de compression inférieur à la limite élastique du bloc 1. Il en résulte une déformation élastique du bloc 1, une contraction de la chambre interne 3 et une diminution correspondante du volume du liquide visqueux compressible qui s'y trouve.

Pendant une utilisation normale du ressort des figures 1 et 2, les plaques 4 et 5 sont soumises à des oscillations axiales, de telle sorte qu'elles se rapprochent et s'éloignent l'une de l'autre alternativement, passant successivement et alternativement par la forme de la figure 1 et par celle de la figure 2. Sous l'effet de ces oscillations, le bloc 1 est soumis à une alternance de compressions élastiques (figure 2) et de détente (figure 1). Simultanément, le liquide visqueux de la chambre 3 est alternativement contracté (figure 2) et expansé (figure 1). Les frottements internes engendrés au sein du liquide visqueux de la chambre 3 pendant ces contractions et expansions alternées participent à l'amortissement des oscillations des plaques 4 et 5.

Le ressort des figures 1 et 2 trouve notamment une application comme tampon sur des véhicules ferroviaires, notamment des locomotives, des voitures pour voyageurs et des wagons pour le transport de marchandises. Il trouve également une application dans des systèmes de suspension de véhicules terrestre (par exemple une voiture automobile ou une voiture de chemin de fer), où il est alors interposé entre un châssis et un essieu du véhicule.

Dans le ressort représenté à la figure 3, la plaque 5 est percée d'un ajutage calibré 6 qui débouche dans un réservoir 7. Le réservoir 7 est obturé par une membrane élastique imperméable 8.

La chambre 3 et le réservoir 7 sont remplis d'un liquide visqueux incompressible, par exemple une huile minérale.

Dans le ressort de la figure 3, la membrane élastique 8 sert, par déformation élastique, à compenser une contraction du volume de la chambre 3 lorsque les deux plaques 4 et 5 sont rapprochées pour comprimer le bloc 1.

Pendant les oscillations axiales des plaques 4 et 5 explicitées plus haut en référence aux figures 1 et 2, le liquide visqueux circule de la chambre 3 vers le réservoir 7 et vice-versa, à travers l'ajutage calibré 6. Les pertes de charges engendrées par le passage du liquide dans l'ajutage 6 participent à l'amortissement des oscillations des plaques 4 et 5.

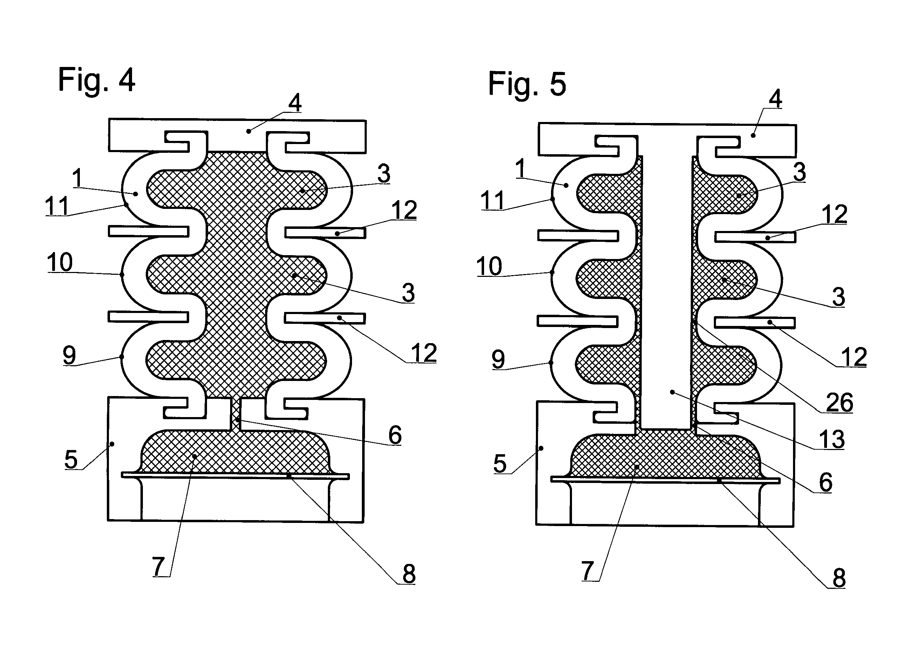

Le ressort de la figure 4 diffère de celui de la figure 3 par la forme du bloc 1. A la figure 4, le bloc 1 comprend trois boudins superposés 9, 10 et 11 séparés par des bagues métalliques rigides 12. Ce bloc 1 a été obtenu au départ d'un tube en élastomère thermoplastique, autour duquel on a enfilé les deux bagues 12 et que l'on a ensuite soumis au traitement mécanique de compression/détente. Les trois boudins 9, 10 et 11 sont le résultat de la déformation rémanente du tube à l'issue du traitement mécanique de compression/détente. On trouve une description détaillée de ce type de ressort dans le document WO-01/34995.

La chambre interne contractile du ressort est commune aux trois boudins 9, 10, 11.

Dans le ressort de la figure 5, la chambre 3 des boudins 9, 10 et 11 est traversée par un barreau rigide 13, fixé à la plaque 4. Le barreau 13 sert de guide pour éviter un flambage du bloc 1. Son diamètre doit être compatible avec le maintien d'un espace 26 suffisant pour la circulation du liquide visqueux de la chambre 3 à hauteur des bagues 12.

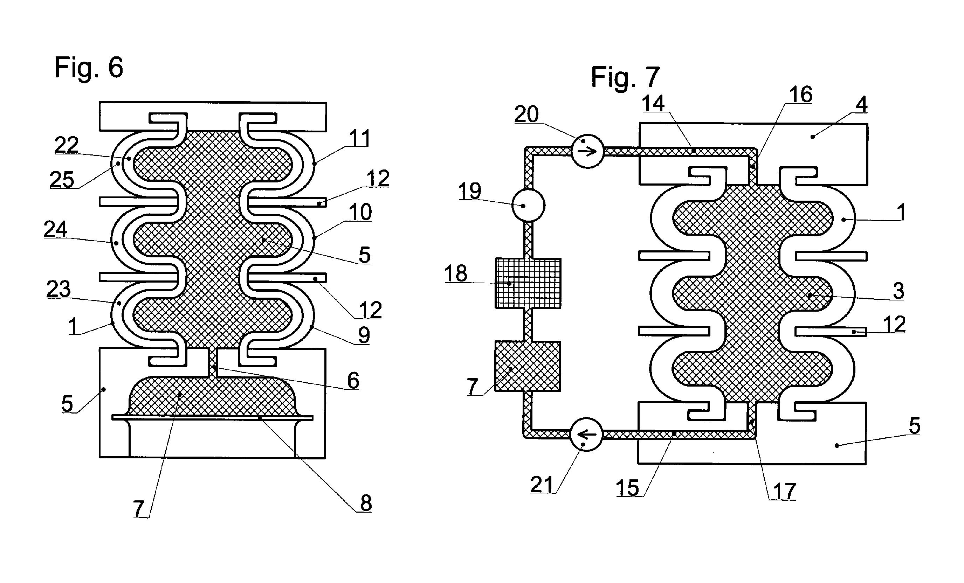

Dans le ressort de la figure 6, les boudins 9, 10 et 11 sont composites et ils ont été obtenus au moyen du procédé décrit dans le document WO 20006/021357 (Bureau Mertens). Selon ce procédé connu, on a enchâssé un cylindre tubulaire droit 22 en élastomère thermoplastique dans un assemblage tubulaire comprenant deux bagues indéformables 12 prises en sandwich entre trois manchons 23, 24 et 25 en élastomère thermoplastique et on a soumis le corps composite ainsi obtenu à un traitement mécanique de compression/détente défini plus haut.

Dans le ressort de la figure 6, le cylindre 22 et les manchons 23, 24 et 25 peuvent être réalisés dans le même élastomère thermoplastique ou dans des élastomères thermoplastiques différents.

La figure 7 montre un système de suspension conforme à l'invention, intégrant un ressort de compression conforme à l'invention.

Dans le système de suspension de la figure 7, le liquide visqueux de la chambre 3 est un liquide incompressible. La chambre contractile 3 et le réservoir expansible 7 sont reliés en boucle par deux canalisations 14 et 15 qui traversent respectivement la plaque 4 et la plaque 5 et qui comprennent des ajutages calibrés 16 et 17. La boucle comprend en outre une vanne unidirectionnelle 20 sur la canalisation 14 et une autre vanne unidirectionnelle 21 sur la canalisation 15. Les vannes 20 et 21 sont disposées de manière à permettre une circulation du liquide visqueux, successivement de la chambre 3 vers le réservoir 7 via la canalisation 15 et la vanne 21, et du réservoir 7 vers la chambre 3 via la canalisation 14 et la vanne 20. Dans le système de la figure 7, le bloc-ressort 1 remplit la fonction d'une pompe, les contractions et dilatations successives de la chambre 3 forçant le liquide visqueux à circuler dans la boucle. Les pertes de charges dans les ajutages calibrés 16 et 17 participent à l'amortissement des oscillations des plaques 4 et 5.

Un dispositif de réfrigération 18 est avantageusement interposé dans la boucle. En option, la boucle peut aussi comprendre un compresseur 19.

**Revendications**

**1.** Ressort de compression comprenant un bloc (1) en élastomère thermoplastique ayant subi successivement une déformation par compression au-delà de la limite élastique de l'élastomère et une détente, **caractérisé en ce qu'**un amortisseur hydraulique est logé dans une chambre interne contractile (3) du bloc (1).

**2.** Ressort selon la revendication 1, **caractérisé en ce que** l'amortisseur hydraulique comprend un liquide visqueux, qui occupe sensiblement la totalité de la chambre contractile (3) qui est étanche à ce liquide.

**3.** Ressort selon la revendication 2, **caractérisé en ce que** le liquide visqueux est compressible.

**4.** Ressort selon la revendication 2, **caractérisé en ce que** la chambre (3) se trouve en communication avec un réservoir (7) expansible élastiquement, par l'intermédiaire d'un ajutage calibré (6) et **en ce que** le liquide occupe sensiblement la totalité du volume de la chambre (3) et du réservoir (7).

**5.** Ressort selon la revendication 4, **caractérisé en ce que** le liquide visqueux est sensiblement incompressible.

**6.** Ressort selon la revendication 4 ou 5, **caractérisé en ce que** le réservoir (7) et la chambre (3) sont reliés en boucle par deux canalisations (14, 15) comprenant chacune une vanne unidirectionnelle (20, 21), les deux vannes étant conçues de telle sorte que l'une (21) desdites vannes soit ouverte et l'autre (20) fermée pendant une contraction du volume de la chambre (3) et une expansion correspondante du volume du réservoir (7) et vice-versa.

**7.** Ressort selon l'une quelconque des revendications 1 à 6, **caractérisé en ce que** le bloc (1) comprend un corps cylindrique unitaire en élastomère thermoplastique, formé d'au moins deux boudins superposés (9, 10, 11) séparés par une bague rigide (12), la chambre interne contractile (3) étant commune aux deux boudins.

**8.** Ressort selon la revendication 7, **caractérisé en ce qu'**un barreau indéformable (13) se trouve inséré axialement dans la chambre interne contractile (3).

**9.** Ressort selon la revendication 8, **caractérisé en ce qu'**un espace (26) est ménagé le long du barreau indéformable (13) à hauteur des bagues (12) pour permettre la circulation du liquide visqueux de la chambre (3) vers le réservoir (7).

**10.** Système de suspension, comprenant au moins un ressort conforme à l'une quelconque des revendications 1 à 9.

Fig. 1

Fig. 2

Fig. 3

EP 1 878 941 A1

Fig. 5

Fig. 4

Fig. 7

Fig. 6

# EP 1 878 941 A1

**Office européen**
**des brevets**

## RAPPORT DE RECHERCHE EUROPEENNE

Numéro de la demande

EP 06 01 4229

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 55 109840 A (TOKAI RUBBER IND LTD) 23 août 1980 (1980-08-23) * abrégé; figures * | 1,2,4,5, 10 | INV. F16F13/08 F16F5/00 |
| X | EP 0 101 072 A (FREUDENBERG CARL FA [DE]) 22 février 1984 (1984-02-22) * abrégé; figures * | 1-3,10 | |
| X | US 3 202 412 A (TRASK WALTER H) 24 août 1965 (1965-08-24) * le document en entier * | 1-5,10 | |
| X | FR 2 406 757 A (WEGMANN & CO [DE]) 18 mai 1979 (1979-05-18) * figures * | 1,10 | |
| X | EP 0 518 126 A (NIKLAUS JOSEF [DE] BERGISCHE STAHLINDUSTRIE [DE]) 16 décembre 1992 (1992-12-16) * abrégé; figure 6 * | 1-3,10 | |
| Y | | 7-9 | **DOMAINES TECHNIQUES RECHERCHES (IPC)** |
| X | GB 1 484 692 A (LOCHNER K) 1 septembre 1977 (1977-09-01) * le document en entier * | 1-5,10 | F16F B61G |
| Y | GB 2 180 618 A (MINER ENTERPRISES MINER ENTERPRISES [US]) 1 avril 1987 (1987-04-01) * abrégé; figure 4 * | 7-9 | |
| A | EP 1 630 446 A (MERTENS BUREAU [BE]) 1 mars 2006 (2006-03-01) | | |
| A | DE 34 05 907 A1 (DAIMLER BENZ AG [DE]) 22 août 1985 (1985-08-22) | | |

-/--

Le présent rapport a été établi pour toutes les revendications

| Lieu de la recherche | Date d'achèvement de la recherche | Examinateur |
|---|---|---|
| La Haye | 19 décembre 2006 | Pemberton, Paul |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen
des brevets**

**RAPPORT DE RECHERCHE EUROPEENNE**

Numéro de la demande

EP 06 01 4229

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 0 224 355 A (FORD MOTOR CO [GB]; FORD WERKE AG [DE]; FORD FRANCE [FR]; FORD MOTOR C) 3 juin 1987 (1987-06-03) ----- | | |
| A | DE 24 10 813 A1 (BAYERISCHE MOTOREN WERKE AG) 18 septembre 1975 (1975-09-18) ----- | | |
| A | FR 2 660 382 A (LEPIERRES GILDAS [FR]; ROBINOT BERTRAND MARCEL [FR]) 4 octobre 1991 (1991-10-04) ----- | | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 19 décembre 2006 | Pemberton, Paul |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 01 4229

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-12-2006

| Document brevet cité au rapport de recherche | | Date de publication | Membre(s) de la famille de brevet(s) | | Date de publication |
|---|---|---|---|---|---|
| JP 55109840 | A | 23-08-1980 | JP | 60027859 B | 01-07-1985 |
| EP 0101072 | A | 22-02-1984 | DE | 3230485 A1 | 23-02-1984 |
| | | | DE | 8223116 U1 | 26-09-1985 |
| US 3202412 | A | 24-08-1965 | AUCUN | | |
| FR 2406757 | A | 18-05-1979 | DE | 2747290 A1 | 26-04-1979 |
| | | | SE | 7810680 A | 22-04-1979 |
| EP 0518126 | A | 16-12-1992 | AT | 134179 T | 15-02-1996 |
| | | | DE | 4117943 A1 | 03-12-1992 |
| GB 1484692 | A | 01-09-1977 | CH | 585357 A5 | 28-02-1977 |
| | | | IT | 1020275 B | 20-12-1977 |
| | | | JP | 50050563 A | 07-05-1975 |
| | | | SE | 7410825 A | 03-03-1975 |
| GB 2180618 | A | 01-04-1987 | AUCUN | | |
| EP 1630446 | A | 01-03-2006 | WO | 2006021357 A1 | 02-03-2006 |
| DE 3405907 | A1 | 22-08-1985 | AUCUN | | |
| EP 0224355 | A | 03-06-1987 | JP | 62113999 A | 25-05-1987 |
| | | | US | 4784378 A | 15-11-1988 |
| DE 2410813 | A1 | 18-09-1975 | DE | 7407909 U | 05-05-1977 |
| FR 2660382 | A | 04-10-1991 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4198037 A
- GB 2180618 A
- WO 9846930 A
- WO 2006021357 A
- WO 0134995 A
- WO 20006021357 A

**Littérature non-brevet citée dans la description**

- *Polymer Engineering and Science,* Décembre 1974, vol. 14 (12), 848-852
- Encyclopedia of polymer Science and Technology. Wiley & Son, 1977, vol. II, 484-509